**Europäisches Patentamt**

**European Patent Office**

**Office européen des brevets**

(19)

(11) Veröffentlichungsnummer: **0 130 454 B1**

# EUROPÄISCHE PATENTSCHRIFT

(12)

(45) Veröffentlichungstag der Patentschrift:
**08.11.89**

(21) Anmeldenummer: **84106960.2**

(22) Anmeldetag: **18.06.84**

(51) Int. Cl.⁴: **C 08 G 18/00**, H 01 B 3/30

(54) **Verfahren zur Herstellung von Reaktionsharzformstoffen.**

(30) Priorität: **27.06.83 DE 3323122**

(43) Veröffentlichungstag der Anmeldung:
**09.01.85 Patentblatt 85/2**

(45) Bekanntmachung des Hinweises auf die Patenterteilung:
**08.11.89 Patentblatt 89/45**

(84) Benannte Vertragsstaaten:
**AT BE CH DE FR GB IT LI NL SE**

(56) Entgegenhaltungen:
**DE-A- 1 963 900**
**DE-A- 2 543 386**
**DE-A- 2 825 614**
**DE-B- 2 130 156**
**FR-A- 2 207 952**
**FR-A- 2 242 419**
**FR-A- 2 244 285**
**FR-A- 2 351 139**
**US-A- 3 334 110**

**Die Akte enthält technische Angaben, die nach dem Eingang der Anmeldung eingereicht wurden und die nicht in dieser Patentschrift enthalten sind.**

(73) Patentinhaber: **Siemens Aktiengesellschaft, Wittelsbacherplatz 2, D-8000 München 2 (DE)**

(72) Erfinder: **Markert, Helmut, Dr., Lohengrinstrasse 17, D-8500 Nürnberg (DE)**
Erfinder: **Rogler, Wolfgang, Dr., Geschwister-Scholl-Strasse 4, D-8520 Erlangen (DE)**
Erfinder: **Kretzschmar, Klaus, Dr., Im Heuschlag 5, D-8520 Erlangen (DE)**
Erfinder: **Hauschildt, Klaus-Robert, Balthasar-Neumann-strasse 83, D-8500 Nürnberg (DE)**

## Beschreibung

Die Erfindung betrifft ein Verfahren zur Herstellung von Oxazolidinon- und Isocyanuratringe enthaltenden Reaktionsharzformstoffen (OX/ICR-Formstoffe) aus Reaktionsharzmischungen aus Polyepoxiden und Polyisocyanaten (EP/IC-Harze) in Gegenwart eines Härtungskatalysators sowie die Verwendung derartiger OX/ICR-Formstoffe.

In der Elektrotechnik werden als mechanischthermisch hochwertige Reaktionsharzformstoffe überwiegend lösungsmittelfreie, säureanhydrid- oder aminisch vernetzbare Epoxidharze eingesetzt. Die thermischen und mechanischen Eigenschaftsforderungen, welche an diese Reaktionsharzformstoffe gestellt werden, werden aber immer höher, da sich insbesondere der Temperaturbereich, in dem die Formstoffe eingesetzt werden, sowohl nach hohen als auch nach tiefen Belastungstemperaturen, immer mehr erweitert. Eine weitere Erhöhung der Wärmeformbeständigkeit der Formstoffe, bei gleichzeitig hoher mechanischer Festigkeit und Temperaturwechselbeständigkeit, stößt jedoch bei mit Säureanhydriden vernetzten Epoxidharzen auf große Schwierigkeiten. Die naheliegende Möglichkeit zur Anhebung der Wärmeformbeständigkeit, nämlich die Anhebung der Glasumwandlungstemperatur durch Erhöhung der Vernetzungsdichte, führt nur bedingt zum Erfolg, da sich dabei das mechanische Eigenschaftsniveau deutlich verschlechtert.

Es ist bekannt, daß EP/IC-Harze bei der Vernetzung OX/ICR-Formstoffe mit hoher Wärmeformbeständigkeit ergeben (DE-AS 1 115 922 und DE-OS 1 963 900). Zur Herstellung der OX/ICR-Formstoffe werden dabei EP/IC-Harze beschrieben (DE-AS 2 359 386), die ein Ansatzmolverhältnis EP:IC < 1 besitzen; diese EP/IC-Harze werden mit Hilfe von geeigneten Reaktionsbeschleunigern, d.h. Härtungskatalysatoren, bei Temperaturen von 70 bis 130°C geliert und dann bei Temperaturen bis über 200°C nachgehärtet. Es wird dabei darauf hingewiesen, daß zur Herstellung von OX/ICR-Formstoffen mit hohen Glasumwandlungstemperaturen bei gleichzeitig guten mechanischen Eigenschaften das günstigste Ansatzmolverhältnis EP:IC im Bereich von 0,2 bis 0,7 liegt.

Eigene Untersuchungen haben zwar die hohe Wärmeformbeständigkeit der auf die genannte Weise hergestellten OX/ICR-Formstoffe bestätigt, sie zeigen gleichzeitig aber auch deutlich, daß die mechanischen Eigenschaften dieser Formstoffe, beispielsweise zur Herstellung von Isolierungen mit größeren Isolierwandstärken oder zur Umhüllung von elektrischen und elektronischen Bauteilen, die einer hohen Temperaturwechselbelastung ausgesetzt sind, nicht ausreichen. Werden beispielsweise EP/IC-Harze (Bisphenol-A-diglycidylether, Diphenylmethandiisocyanat und 66% Quarzmehl) mit einem Ansatzmolverhältnis EP:IC von 0,2 bis 0,7 nach den angegebenen Vernetzungsbedingungen mit tert. Aminen oder Imidazolen als Reaktionsbeschleuniger vernetzt, dann werden außerordentlich spröde OX/ICR-Formstoffe erhalten, deren mechanische Eigenschaften sich mit steigendem Gehalt an Diphenylmethandiisocyanat im EP/IC-Harz zunehmend verschlechtern.

Es ist deshalb verständlich, daß bereits auch vorgeschlagen wurde, die mechanischen Eigenschaften von OX/ICR-Formstoffen durch den Einbau flexibilisierender bzw. elastifizierender Komponenten zu verbessern. Als geeignete Polyepoxidkomponente für die EP/IC-Harze wurden dabei präpolymere Oxazolidinone mit terminalen Epoxidgruppen vorgeschlagen (DE-AS 2 440 953). Diese Oxazolidinon-Präpolymeren werden durch Reaktion von Polyisocyanaten mit einem Überschuß eines Polyepoxids hergestellt. Die Viskosität der Präpolymeren liegt jedoch sehr hoch, so daß sie lösungsmittelfrei nur schwer zugänglich sind. Ein weiterer Vorschlag besteht darin, in EP/IC-Harzen Polyglycidylester von dimerisierten Fettsäuren in Mischungen mit anderen Polyepoxiden einzusetzen (DE-AS 2 545 106). Diese Polyglycidylester sind zwar niedrigviskos, sie zeigen jedoch ein schlechtes Mischungsverhalten im EP/IC-Harz. Vorgeschlagen wurde ferner, den EP/IC-Harzen als elastifizierende Komponente Copolymere von Butadien, beispielsweise mit Acrylnitril, zuzusetzen (DE-AS 2 746 789). Die Copolymeren besitzen dabei funktionelle Gruppen, wie Hydroxyl- und Carboxylgruppen, wobei die Carboxylgruppen mit Polyepoxiden umgesetzt sein können. Aufgrund der hohen Viskosität sind diese Copolymere, insbesondere bei füllstoffhaltigen EP/IC-Harzen, jedoch kaum einsetzbar; außerdem sind sie schwer verarbeitbar, da sie eine hohe Entmischungstendenz im EP/IC-Harz zeigen.

Aufgabe der Erfindung ist es, ein Verfahren anzugeben, das – ausgehend von Reaktionsharzmischungen aus Polyepoxiden und Polyisocyanaten, sogenannten EP/IC-Harzen – eine einfache Herstellung von wärmebeständigen OX/ICR-Formstoffen, d.h. Oxazolidinon- und Isocyanuratringe enthaltenden Reaktionsharzformstoffen, mit verbesserten mechanischen Eigenschaften erlaubt, wobei einerseits auf flexibilisierende bzw. elastifizierende Zusätze verzichtet werden soll und andererseits gut verarbeitbare Reaktionsharzmischungen vorliegen sollen.

Dies wird erfindungsgemäß in dem Verfahren nach Anspruch 1 dadurch erreicht, daß bestimmte lösungsmittelfreie gieß- und imprägnierfähige EP/IC-Harze mit einem Ansatzmolverhältnis der Epoxid- und Isocyanatgruppen (EP:IC) von 1 bis 5 und einer Viskosität bis zu 7000 mPa · s bei 25°C mittels tert. Aminen oder Imidazolen als Katalysatoren bei Geliertemperaturen bis 130°C und Nachhärtungstemperaturen von vorzugsweise 130 bis 200°C zu OX/ICR-Formstoffen mit einem Molverhältnis der Oxazolidinon- und Isocyanuratringe (OX:ICR) zwischen 1 und 5,7 vernetzt werden, wobei der Umsatz der Epoxid- und Isocyanatgruppen nach der Vernetzung über 90% liegt.

Die Verbesserung der mechanischen Eigenschaften läßt sich dabei dadurch erklären, daß in das Netzwerk ein höherer Gehalt an Oxazolidinon- und Polyoxazolidinonstrukturen eingebaut wird als bei EP/IC-Harzen mit einem Ansatzmolverhältnis EP:IC <1. Isocyanuratstrukturen bewirken ein engmaschiges Netzwerk und eine Versteifung der Polymerkette, so daß sie in erster Linie die Glasumwandlungstemperatur der Formstoffe beeinflussen. Im Gegensatz dazu weiten die Oxazolidinonstrukturen das Netzwerk auf und führen zu einer größeren Beweglichkeit der Polymerkette. Die mechanisch-thermischen Eigenschaften von OX/ICR-Formstoffen werden deshalb in erster Linie durch das Molverhältnis der in das Netzwerk eingebauten Oxazolidinon- und Isocyanuratstrukturen bestimmt. Bei den erfindungsgemäß hergestellten Formstoffen werden die mechanischen Eigenschaften auch noch dadurch verbessert, daß der Gehalt der – durch Epoxidpolymerisation entstehenden – Polyetherstrukturen im Polymernetzwerk erhöht wird.

Eigene Untersuchungen haben ergeben, daß bei der Vernetzung von EP/IC-Harzen mit einem Ansatzmolverhältnis EP:IC von 0,2 bis 0,7 das Molverhältnis OX:ICR der im OX/ICR-Formstoff gebildeten OX- und ICR-Ringe deutlich unter 1 liegt; die in den Tabellen 1 und 2 angeführten Versuchsergebnisse zeigen, daß das Molverhältnis OX:ICR meist im Bereich von 0,4 bis 0,6 liegt. Diese Ergebnisse zeigen weiter, daß die Verwendung unterschiedlicher Reaktionsbeschleuniger und die Variation der Vernetzungsbedingungen im Temperaturbereich von 90 bis 200°C keine Möglichkeit ergeben, die Vernetzung der EP/IC-Harze mit einem Ansatzmolverhältnis EP:IC von 0,2 bis 0,7 dahingehend zu verändern, daß die Oxazolidinonbildung wesentlich verstärkt wird. Dies ist – im Gegensatz dazu – beim erfindungsgemäßen Verfahren aber der Fall. Von besonderem Vorteil ist dabei auch, daß das Molverhältnis OX:ICR nicht nur zugunsten der Oxazolidinonbildung erhöht wird, sondern darüber hinaus durch verschiedene Maßnahmen, die miteinander kombiniert werden, gezielt gesteuert werden kann. Es sind dies das Ansatzmolverhältnis EP:IC, das im Bereich zwischen 1 und 5 liegt, die Art – und gegebenenfalls die Konzentration – des Reaktionsbeschleunigers und die Vernetzungstemperatur.

Die Versuchsergebnisse in Tabelle 3 zeigen, daß bei Kombination der genannten Maßnahmen jedes Molverhältnis OX:ICR im Bereich zwischen 1 und 5 eingestellt werden kann. Hinzu kommt noch, daß in den vorvernetzten EP/IC-Harzen, die keine Isocyanatgruppen mehr, aber noch Epoxidgruppen enthalten, durch Reaktion von Epoxidgruppen mit Isocyanurat eine weitere Oxazolidinonbildung möglich ist. Die Werte der Tabelle 4 zeigen, daß diese Reaktion bei Temperaturen oberhalb 130°C merklich abläuft; mit steigendem Gehalt an Epoxiden im vorvernetzten EP/IC-Harz verstärkt sich diese Reaktion.

Die Verbesserung der mechanischen Eigenschaften der nach dem erfindungsgemäßen Verfahren hergestellten hochwärmebeständigen OX/ICR-Formstoffe mit einem Molverhältnis OX:ICR >1 ergibt sich aus Tabelle 7. Ein Vergleich der Werte in Tabelle 7 zeigt, daß OX/ICR-Formstoffe, die aus EP/IC-Harzen (A und B) mit einem Ansatzmolverhältnis EP:IC ≥1 hergestellt wurden, gegenüber Formstoffen aus EP/IC-Harzen mit einem EP:IC-Verhältnis von 0,5 (Harz D) ein deutlich höheres Molverhältnis OX:ICR besitzen und erheblich verbesserte mechanische Eigenschaftswerte ergeben. Diese Werte zeigen weiter, daß beim EP/IC-Harz D, trotz erhöhter Konzentration des Härtungskatalysators, der Epoxidumsatz nur bei 80% liegt. Die Werte für die Wärmeformbeständigkeiten liegen zwar bei den EP/IC-Harzen A und B gegenüber D etwas tiefer, doch besitzen die OX/ICR-Formstoffe mit Glasumwandlungstemperaturen bis über 200°C immer noch eine ausgezeichnete Wärmeformbeständigkeit. Die Werte für das EP/IC-Harz C lassen aber auch erkennen, daß bei einem Ansatzmolverhältnis EP:IC >5 keine als hochwärmeformbeständig zu bezeichnenden OX/ICR-Formstoffe mehr zu erwarten sind. Der Vergleich der Werte für die OX/ICR-Formstoffe aus den EP/IC-Harzen E und F ergibt ein analoges Bild wie der Vergleich der Formstoffe aus den Harzen A und B mit D. Die Werte für das EP/IC-Harz E zeigen weiter, daß durch die Auswahl spezieller Polyepoxidkomponenten im EP/IC-Harz die Wärmeformbeständigkeit der OX/ICR-Formstoffe – bei guten mechanischen Eigenschaften – noch erhöht werden kann. Von besonderer Bedeutung für den technischen Einsatz der EP/IC-Harze ist ferner, daß sich die gezielte Einstellung des Molverhältnisses OX:ICR – und damit die Steuerung des mechanisch-thermischen Eigenschaftsniveaus – auf die bestehenden fertigungstechnischen Verfahren in hervorragender Weise ohne zusätzliche Maßnahmen übertragen läßt.

Auch für den Fachmann war nicht vorsehbar, daß sich die Oxazolidinonbildung und damit die mechanischen Eigenschaften der OX/ICR-Formstoffe bei einem Ansatzmolverhältnis EP:IC >1 gegenüber einem Molverhältnis EP:IC <1 derart gezielt steuern und verbessern lassen. Überraschend war auch, daß die an und für sich bekannte Reaktion der Oxazolidinonbildung aus Isocyanuraten und Epoxiden noch in den bereits hoch vernetzten EP/IC-Harzen mit einer Glasumwandlungstemperatur größer 150°C so eindeutig abläuft. Es zeigte sich aber auch, daß das Ansatzmolverhältnis EP:IC nur in einem begrenzten Bereich, nämlich zwischen 1 und 5, dazu verwendet werden kann, OC/ICR-Formstoffe mit einem hervorragenden Gesamteigenschaftsniveau herzustellen. Eine weitere Erhöhung des Epoxidgehaltes im Ansatzmolverhältnis EP:IC auf Werte >5 ist für den technischen Einsatz der OX/ICR-Formstoffe in der Elektrotechnik nur noch von geringer Bedeutung, da dann die Glasumwandlungstemperaturen der Formstoffe deutlich absinken und die mechanischen Eigenschaften nicht mehr wesentlich verbessert werden. Formstoffe mit solchen mäßigen mechanisch-thermischen Eigenschaften lassen sich im übrigen auch mit konventionellen säureanhydridvernetzten Epoxidharzen erzielen.

Aus der DE-OS 2 825 614 ist ein Verfahren zur Herstellung von vernetzten Polymeren durch Umsetzung von flüssigen, mindestens zwei Epoxidgruppen im Molekül enthaltenden Epoxidverbindungen und Polyisocyanaten, und gegebenenfalls Polyhydroxylverbindungen, in Gegenwart von Härtungskatalysatoren bei Temperaturen zwischen Raumtemperatur und 250 °C bekannt. Dabei kann bei diesem Verfahren – bei der Umsetzung einer Epoxidverbindung mit einem Polyisocyanat – das Mengenverhältnis so gewählt werden, daß im Ausgangsreaktionsgemisch auf eine Epoxidgruppe 0,1 bis 2 Isocyanatgruppen (vorzugsweise 0,3 bis 1,2 Isocyanatgruppen) entfallen. Bei diesem Verfahren werden aber ausschließlich saure Katalysatoren eingesetzt, es ist nämlich zwingend die Verwendung einer Komplexverbindung von BF₃ mit einem Ether, einer Phosphoniumverbindung oder mit Wasser, gegebenenfalls zusammen mit einer im Reaktionsgemisch löslichen Sn-, Zn oder Fe-Verbindung, als Härtungskatalysator vorgeschrieben. Im Gegensatz dazu werden beim erfindungsgemäßen Verfahren ausschließlich basische Katalysatoren eingesetzt. In der DE-OS 2 825 614 findet sich außerdem kein Hinweis auf die beim erfindungsgemäßen Verfahren wesentliche Kombination von EP : IC-Verhältnis (im Reaktionsharz), Härtungskatalysator und Vernetzungstemperatur, und insbesondere auch kein Hinweis auf das bei den hergestellten Formstoffen wesentliche OX : ICR-Verhältnis.

Die vorstehenden Ausführungen gelten auch in bezug auf die DE-OS 2 543 386. Aus dieser Druckschrift ist eine wärmehärtende Harzzusammensetzung bekannt, die im wesentlichen folgende Bestandteile umfaßt:

a) Ein Isocyanat-Endgruppen enthaltendes Kondensationsprodukt, das durch Umsetzung einer Polycarbonsäureverbindung mit wenigstens einem Säureanhydridring mit einem stöchiometrischen Überschuß einer polyfunktionellen Isocyanatverbindung erhalten wird, oder das Kondensationsprodukt, das nicht umgesetzte Isocyanatverbindung enthält,

b) eine polyfunktionelle Epoxyverbindung,

c) einen Katalysator, der hauptsächlich zur Bildung von Isocyanurat- und Oxazolidinonringen führt, sowie gegebenenfalls

d) Additive, wie Färbemittel, Füllstoffe usw.

Dabei kann das Isocyanat-Endgruppen enthaltende Kondensationsprodukt bzw. das nicht umgesetzte Isocyanatverbindung enthaltende Kondensationsprodukt in einem Äquivalentverhältnis der Isocyanatgruppen zu der polyfunktionellen Epoxyverbindung von 0,2:1 bis 4:1 vorliegen.

Die in den aus der DE-OS 2 543 386 bekannten Harzzusammensetzungen liegenden Isocyanatverbindungen sind nicht nur teuer und schwer herstellbar, sie sind technisch auch kaum einzusetzen, weil sie von der Viskosität her unbrauchbar sind; es liegen nämlich hochviskose bis feste Produkte vor. Die bekannten Harzzusammensetzungen scheiden deshalb auch für den praktischen Einsatz als Gieß- und Imprägnierharze aus. Ein weiterer Nachteil dieser Harze ist die relativ hohe Geliertemperatur. Im Gegensatz dazu weisen die beim erfindungsgemäßen Verfahren eingesetzten Reaktionsharzmischungen eine niedrige Viskosität auf und eignen sich deshalb in hervorragender Weise als Gieß- und Imprägnierharze, und zwar ohne Verwendung eines Lösungsmittels.

Aus der DE-AS 2 130 156 ist ein oxazolidinonmodifiziertes Epoxy-Novolakharz bekannt, das durch Umsetzung von (a) einem Epoxy-Novolakharz und (b) einem organischen Diisocyanat oder Diisothiocyanat, gegebenenfalls in Gegenwart eines einwertigen Alkohols, oder einem Carbamat aus einem organischen Diisocyanat und einem einwertigen Alkohol in Gegenwart von Katalysatoren erhalten wird, wobei das Verhältnis von NCO- oder NCS-Gruppen zu Epoxy-Gruppen im Bereich von 0,1:1 bis 0,5:1 gehalten wird. Hierbei handelt es sich aber nicht um die Herstellung von Formstoffen, sondern um die Herstellung von Harzen, d.h. lösliche Verbindungen. Diese Harze sind modifizierte Epoxidverbindungen, die dann – in bekannter Weise – gehärtet werden, d.h. es erfolgt eine reine Epoxidharz-Härtung, aber keine Umsetzung mit Isocyanat.

Für die beim erfindungsgemäßen Verfahren eingesetzten, Oxazolidinon-freien Polyepoxide sind relativ niedrigviskose aliphatische, cycloaliphatische oder aromatische Epoxide sowie deren Mischungen besonders gut geeignet. Bevorzugt werden
Bisphenol-A-diglycidylether,
Bisphenol-F-diglycidylether,
3,4-Epoxycyclohexylmethyl-3′,4′-epoxycyclohexan-carboxylat,
Polyglycidylether von Phenol/Formaldehyd- bzw. Kresol/Formaldehyd-Novolak,
Diglycidylester von Phthal-,
Isophthal- oder Terephthalsäure
sowie Mischungen aus diesen Epoxidharzen eingesetzt. Weitere verwendbare Polyepoxide sind beispielsweise hydrierte
Bisphenol-A- bzw. Bisphenol-F-diglycidylether,
Hydantoinepoxidharze,
Triglycidylisocyanurat,
Triglycidyl-p-aminophenol,
Tetraglycidyldiaminodiphenylmethan,
Tetraglycidyldiaminodiphenylether,
Tetrakis(4-glycidoxyphenyl)-ethan,
Urazolepoxide und Epoxide, die im «Handbook of Epoxy Resins» von Henry Lee und Kris Neville, McGraw-Hill Book Company, 1967, und in der Monographie von Henry Lee «Epoxy Resins», American Chemical Society, 1970, beschrieben sind.

Als Polyisocyanate sind beim erfindungsgemäßen Verfahren relativ niedrigviskose aliphatische, cycloaliphatische oder aromatische Isocyanate sowie deren Mischungen besonders gut geeignet. Bevorzugt werden Isomerengemische aus 4,4′- und 2,4′-Diphenylmethandiisocyanat, polyolmodifizierte Polyisocyanate und Gemische von flüssigen Polyisocyanaten mit höhermolekularen Polyisocyanaten oder Carbodiimid-Polyisocyanaten eingesetzt. Weitere verwendbare Polyisocyanate sind beispielsweise
Hexan-1,6-diisocyanat,
Cyclohexan-1,3-diisocyanat und Isomere,
4,4′-Dicyclohexylmethyndiisocyanat,
3-Isocyanatmethyl-3,5,5-trimethylcyclo-

hexylisocyanat,
1,3-Dimethylbenzol-ω,ω'-diisocyanat und Isomere,
1-Methylbenzol-2,4-diisocyanat und Isomere,
Naphthalin-1,4-diisocyanat,
Diphenylether-4,4'-diisocyanat und Isomere,
Diphenylsulfon-4,4'-diisocyanat und Isomere,
sowie tri- oder höherfunktionelle Isocyanate, wie beispielsweise
3,3',4,4'-Diphenylmethantetraisocyanat. Ferner können auch Isocyanate verwendet werden, die in üblicher Weise mit Phenol oder Kresol maskiert sind. Dimere und Trimere der genannten mehrwertigen Isocyanate sind ebenfalls einsetzbar. Derartige Polyisocyanate besitzen endständige freie Isocyanatgruppen und enthalten einen oder mehrere Uretdion- und/oder Isocyanuratringe. Verfahren zur Herstellung verschiedener Arten solcher Trimerer und Uretdione sind beispielsweise in den US-Patentschriften 3 494 888, 3 108 100 und 2 977 370 beschrieben.

Die EP/IC-Harze können auch Komponenten enthalten, die im allgemeinen an den chemischen Reaktionen, die zu den OX/ICR-Formstoffen führen, nicht beteiligt sind. Als derartige Füllstoffe eignen sich mineralische und faserförmige Füllstoffe, wie Quarzmehl, Quarzgut, Aluminiumoxid, Glaspulver, Glimmer, Kaolin, Dolomit, Graphit und Ruß sowie Kohlefasern, Glasfasern und Textilfasern. Farbstoffe, Stabilisatoren und Haftvermittler sowie andere Additive üblicher Art können den EP/IC-Harzen ebenfalls zugesetzt werden.

Beim erfindungsgemäßen Verfahren spielt der bei der Vernetzung die OX- und ICR-Ringbildung fördernde Katalysator eine bedeutende Rolle. Eingesetzt werden dabei tert. Amine und Imidazole. Als tert. Amine eignen sich beispielsweise
Tetramethylethylendiamin,
Dimethyloctylamin,
Dimethylaminoethanol,
Dimethylbenzylamin,
2,4,6-Tris(dimethylaminomethyl)-phenol,
N,N'-Tetramethyldiaminodiphenylmethan,
N,N'-Dimethylpiperazin,
N-Methylmorpholin,
N-Methylpiperidin,
N-Ethylpyrrolidin,
1,4-Diazabicyclo(2,2,2)-octan und Chinoline.
Geeignete Imidazole sind beispielsweise
1-Methylimidazol,
2-Methylimidazol,
1,2-Dimethylimidazol,
1,2,4,5-Tetramethylimidazol,
1-Benzyl-2-phenylimidazol,
2-Undecylimidazol,
2-Heptadecylimidazol,
2-Ethyl-4-methylimidazol,
1-Cyanoethyl-2-ethyl-4-methylimidazol,
1-Cyanoethyl-2-phenylimidazol und
1-(4,6-Diamino-s-triazinyl-2-ethyl)-2-phenylimidazol.

Die genannten Härtungskatalysatoren reagieren allerdings schon bei niederen Temperaturen und führen so zu relativ kurzen Topfzeiten, was die Verarbeitung der EP/IC-Harze erschweren kann. Bevorzugt werden beim erfindungsgemäßen Verfahren deshalb latente Härtungskatalysatoren eingesetzt, die bei niederen Temperaturen eine ausreichende Gebrauchsdauer gewährleisten. Als derartige Katalysatoren, die auch als latente Reaktionsbeschleuniger bezeichnet werden, eignen sich insbesondere Additionskomplexe von Bortrihalogeniden mit tert. Aminen und Imidazolen, beispielsweise die in der DE-PS 2 655 367 beschriebenen Additionskomplexe von Bortrichlorid und tert. Aminen der allgemeinen Formel $BCl_3 \cdot NR^1R^2R^3$, in der $R^1$, $R^2$ und $R^3$ gleiche oder verschiedene aliphatische, aromatische, heterocyclische oder arylaliphatische Reste sind, die paarweise auch Bestandteil von heterocyclischen Ringen sein können. Geeignet sind auch die analogen Komplexe des Bortrifluorids der Formel $BF_3 \cdot NR^1R^2R^3$, wobei $R^1$, $R^2$ und $R^3$ die vorstehend angegebene Bedeutung haben. Spezielle Beispiele für geeignete tert. Amine der $BF_3$- und $BCl_3$-Komplexe sind Octyldimethylamin und Benzyldimethylamin. Auch Morpholinverbindungen und Imidazole, insbesondere N-Methylmorpholin, N-Ethylmorpholin, 1,2-Dimethylimidazol und 1-Benzyl-2-phenylimidazol, sind zur Bildung von $BCl_3$- bzw. $BF_3$-Komplexen geeignet.

Eine Verlängerung der Gebrauchsdauer der beim erfindungsgemäßen Verfahren eingesetzten EP/IC-Harze kann auch dann erreicht werden, wenn als latente Katalysatoren tert. Amine oder Imidazole verwendet werden, die durch Zusatz von Elektronenakzeptoren desaktiviert sind. Geeignete Elektronenakzeptoren sind beispielsweise:
7,7,8,8-Tetracyanochinodimethan,
2,4-Dichlor-5,6-dicyanobenzochinon,
2,3,5,6-Tetrachlorbenzochinon und
1,2-Dinitrobenzol sowie Isomere davon.

Als Härtungskatalysatoren für die EP/IC-Harze eignen sich ferner Oniumsalze von tert. Aminen und Imidazolen, d.h. Oniumsalze mit N als Zentralatom. Beispiele für verwendbare Oniumsalze sind:
Tetraethylammoniumchlorid,
Tetraethylammoniumbromid,
Octyltrimethylammoniumbromid,
Benzyltrimethylammoniumchlorid,
N-Ethylmorpholiniumbromid,
2-Ethyl-4-methylimidazoliumbromid,
N-Ethyl-morpholiniumtetraphenylborat,
1,2-Dimethylimidazoliumtetraphenylborat und
Tetrabutylammoniumtetraphenylborat.

Der Gehalt des Härtungskatalysators in den EP/IC-Harzen beträgt vorteilhaft 0,01 bis 5 Gew.-%, vorzugsweise 0,25 bis 2,5 Gew.-%, bezogen auf die Masse der Harzmatrix. Durch die Art und durch die Konzentration des Härtungskatalysators kann dabei die Härtungstemperatur und die Härtungsdauer beeinflußt werden.

Die nach dem erfindungsgemäßen Verfahren hergestellten OX/ICR-Formstoffe eignen sich insbesondere zur Imprägnierung und Einbettung von elektrischen Wicklungen oder zum Verguß und zur Umhüllung von elektrischen und elektronischen Bauteilen.

Anhand von Ausführungsbeispielen soll die Erfindung noch näher erläutert werden. Die Zusammensetzung der in den nachfolgenden Beispielen eingesetzten EP/IC-Harze kann dabei den Tabellen 5 und 6 entnommen werden.

Beispiele 1 bis 3

Verwendet wurden die EP/IC-Harze A, B und C. Die einzelnen Komponenten (BAGE, MDI und QM I) wurden nacheinander in einen auf 80 °C vorgewärmten Mischbehälter eingerührt und 1 Stunde bei 80 °C unter Rühren und vermindertem Druck (< 1 mbar) entgast. Anschließend wurden die EP/IC-Harze auf 60 °C abgekühlt, der Härtungskatalysator zugesetzt und die EP/IC-Harze nochmals 1 Stunde bei 60 °C unter Rühren und vermindertem Druck entgast. Danach wurden die EP/IC-Harze unter vermindertem Druck in auf 100 °C vorgeheizte Normstabformen gegossen. Die Vernetzung (Härtung) der EP/IC-Harze erfolgte 1 h bei 100 °C, danach 3 Stunden bei 125 °C und danach 16 Stunden bei 200 °C. An den so hergestellten OX/ICR-Formstoffen wurden die Biegefestigkeit (BF) nach DIN 53 452, die Schlagzähigkeit (SZ) nach DIN 53 453 und die Wärmeformbeständigkeit nach Martens (MT) nach DIN 53 458 gemessen. Die Bestimmung des Molverhältnisses OX:ICR erfolgte infrarotspektroskopisch und die des Epoxid- und Isocyanatgruppengehaltes durch chemische Analyse. Die gefundenen Werte sind in Tabelle 7 aufgeführt.

Beispiel 4 (Vergleichsversuch)

Verwendet wurde das EP/IC-Harz D. Die Aufbereitung des EP/IC-Harzes und die Herstellung der Normstab-Formstoffproben erfolgte analog Beispiel 1. Die Meßwerte sind ebenfalls in Tabelle 7 enthalten.

Beispiel 5

Verwendet wurde das EP/IC-Harz E. Die Aufbereitung des Harzes und die Herstellung der Normstab-Formstoffproben erfolgte analog Beispiel 1. Das EP/IC-Harz E wurde dabei jedoch in auf 125 °C vorgeheizte Normstabformen gegossen und dann 1 Stunde bei 125 °C und 16 Stunden bei 200 °C vernetzt und gehärtet. Die Meßwerte sind in Tabelle 7 enthalten.

Beispiel 6 (Vergleichsversuch)

Verwendet wurde das EP/IC-Harz F. Die Aufbereitung des Harzes und die Herstellung der Normstab-Formstoffproben erfolgte analog Beispiel 5. Die Meßergebnisse sind ebenfalls in Tabelle 7 aufgeführt.

Beispiel 7

Verwendet wurde das EP/IC-Harz G. Die Aufbereitung des Harzes und die Herstellung der Normstab-Formstoffproben erfolgte analog Beispiel 1, jedoch wurde hierbei das EP/IC-Harz vor der Zugabe des Härtungskatalysators auf 40 °C abgekühlt. Das EP/IC-Harz wurde dann 10 Minuten bei 40 °C unter Rühren und vermindertem Druck entgast und anschließend in auf 80 °C vorgewärmte Normstabformen vergossen. Die Vernetzung (Härtung) des EP/IC-Harzes G erfolgte 2 Stunden bei 80 °C, danach 2 Stunden bei 100 °C, danach 2 Stunden bei 150 °C und danach 16 Stunden bei 180 °C. Die gefundenen Werte sind in Tabelle 7 aufgeführt.

Beispiel 8

Verwendet wurde das EP/IC-Harz H. Die Aufbereitung des Harzes und die Herstellung der Normstab-Formstoffproben erfolgte analog Beispiel 1. Die Meßwerte sind in Tabelle 7 enthalten.

Beispiele 9 und 10

Verwendet wurden die EP/IC-Harze I und K. Die Aufbereitung der Harze und die Herstellung der Normstab-Formstoffproben erfolgte analog Beispiel 1. Zur Zugabe des Härtungskatalysators wurden die EP/IC-Harze jedoch auf 50 °C abgekühlt und anschließend 20 Minuten bei 50 °C unter Rühren und vermindertem Druck entgast. Die EP/IC-Harze wurden dann in auf 100 °C vorgewärmte Normstabformen vergossen und anschließend 4 Stunden bei 130 °C und danach 16 Stunden bei 200 °C gehärtet. Die Meßwerte sind in Tabelle 7 aufgeführt.

Tabelle 1    Bildung von OX- und ICR-Ringen bei der Vernetzung von EP/IC-Harzen: Ansatzmolverhältnis EP : IC = 0,25 bis 0,5

| EP/IC-Harz Komponenten[1] | Molverhältnis EP : IC | Härtungskatalysator[1] in %[3] | | | Molverhältnis OX : ICR | Vernetzungsbedingungen |
|---|---|---|---|---|---|---|
| | | BCL$_3$ · DMBA | 1CE2PI | T-Base | | |
| BAGE, MDI | 0,50 | 1,0 | — | — | 0,51 | 3 h 130 °C und 16 h 200 °C |
| | 0,50 | 2,0 | — | — | 0,60 | 3 h 130 °C und 16 h 200 °C |
| NOEP, PPGE[2], MDI | 0,37 | 1,5 | — | — | 0,46 | 3 h 110 °C und 4 h 140 °C und 16 h 200 °C |
| | 0,37 | — | 1,0 | — | 0,54 | 3 h 110 °C und 4 h 140 °C und 16 h 200 °C |
| BAGE, MDI | 0,25 | 2,0 | — | — | 0,46 | 5 h 130 °C und 16 h 200 °C |
| | 0,25 | — | — | 2,5 | 0,45 | 5 h 130 °C und 16 h 200 °C |

[1] Chemische Bezeichnung siehe Tabelle 5
[2] Molverhältnis NOEP : PPGE = 1,0
[3] Katalysatorkonzentration bezogen auf Harzmatrix

Tabelle 2

OX- und ICR-Ringbildung in Abhängigkeit von der Katalysatorkonzentration bei der Vernetzung von EP/IC-Harzen (Molverhältnis EP : IC = 0,25 bzw. 0,50)

| Vernetzungs-bedingungen | Molverhältnis BAGE[1] : MDI[1] | Härtungskatalysator BCl$_3$ · DMBA[1] | | | | | | in %[2] | | |
| --- | --- | --- | --- | --- | --- | --- | --- | --- | --- | --- |
| | | 0,5 | 1,0 | 2,0 | 0,5 | 1,0 | 2,0 | 0,5 | 1,0 | 2,0 |
| | | Epoxidumsatz in % | | | Isocyanatumsatz in % | | | Molverhältnis OX : ICR | | |
| 90 °C 1 h und | 0,50 | 81 | 86 | 89 | 99 | 98 | 99 | 0,35 | 0,43 | 0,43 |
| 180 °C 6 h | 0,25 | 63 | 67 | 78 | 94 | 96 | 95 | 0,23 | 0,23 | 0,30 |
| 110 °C 30 min und | 0,50 | 73 | 77 | 87 | 98 | 99 | 100 | 0,46 | 0,51 | 0,61 |
| 180 °C 6 h | 0,25 | 66 | 74 | 77 | 95 | 93 | 94 | 0,31 | 0,37 | 0,43 |
| 130 °C 30 min und | 0,50 | 70 | 79 | 85 | 98 | 100 | 99 | 0,51 | 0,61 | 0,69 |
| 180 °C 6 h | 0,25 | 63 | 76 | 78 | 94 | 93 | 94 | 0,37 | 0,37 | 0,43 |

[1] Chemische Bezeichnung siehe Tabelle 5
[2] Katalysatorkonzentration bezogen auf Harzmatrix

Tabelle 3

Bildung von OX- und ICR-Ringen bei der Vernetzung von EP/IC-Harzen:
Ansatzmolverhältnis EP : IC = 1,0 bis 3,0

| Molverhältnis BAGE[1] : MDI[1] | Härtungs-katalysator[1] | Molverhältnis OX : ICR | Vernetzungsbedingungen |
| --- | --- | --- | --- |
| 1,0 | 2,0% BCl$_3$ · DMOA | 1,15 | 1 h 100 °C, 3 h 130 °C, 16 h 200 °C |
| 1,0 | 1,5% BCl$_3$ · DMOA | 1,10 | 1 h 100 °C, 3 h 130 °C, 16 h 200 °C |
| 1,0 | 1,0% BF$_3$ · 1B2PI | 1,46 | 10 K/min bis 200 °C, 16 h 200 °C |
| 1,0 | 1,0% 1CE2PI | 1,90 | 1 h 100 °C, 4 h 140 °C, 16 h 200 °C |
| 1,0 | 1,0% 1B2PI | 4,10 | 10 K/min bis 200 °C, 16 h 180 °C |
| 2,0 | 2,0% T-Base | 2,50 | 4 h 130 °C, 16 h 200 °C |
| 2,0 | 2,0% BF$^3$ · DMBA | 1,20 | 1 h 100 °C, 3 h 135 °C, 16 h 180 °C |
| 2,0 | 1,0% BCl$_3$ · DMBA | 1,90 | 1 h 100 °C, 3 h 130 °C, 16 h 200 °C |
| 2,0 | 1,0% 1,2-DMI | 4,40 | 2 h 100 °C, 2 h 150 °C, 16 h 200 °C |
| 3,0 | 1,5% BCl$_3$ · DMBA | 4,44 | 30 min 135 °C, 16 h 200 °C |

[1] Chemische Bezeichnung siehe Tabelle 5

Tabelle 4

Anstieg des Molverhältnisses OX : ICR bei der Vernetzung von EP/IC-Harzen: Ansatzmolverhältnis BAGE[1] : MDI[1]–1,0

| Vernetzungs-bedingungen | Katalysator 2% BCl$_3$ · DMBA[1] | | | Katalysator 1% 1CE2PI[1] | | |
| --- | --- | --- | --- | --- | --- | --- |
| | OX : ICR mol/mol | Epoxid-gruppen | Isocyanat-gruppen | OX : ICR mol/mol | Epoxid-gruppen | Isocyanat-gruppen |
| 1h 125 °C | 0,47 | + +[2] | −[4] | 0,14 | + + | + |
| 1 h 125 °C und 2 h 150 °C | 0,65 | +[3] | − | 1,70 | + | + |
| 1h 125 °C und 2 h 150 °C und 16 h 200 °C | 1,25 | − | − | 2,50 | − | − |

[1] Chemische Bezeichnung siehe Tabelle 5
[2] + +: noch stark vorhanden
[3] +: noch vorhanden
[4] −: vollständig umgesetzt

Tabelle 5

EP/IC-Harzkomponenten, Härtungskatalysatoren, Füllstoffe

| Polyepoxid | Kurzbezeichnung | Epoxidwert mol/100 g | Viskosität mPa · s |
|---|---|---|---|
| Bisphenol-A-diglycidylether | BAGE | 0,56–0,58 | 4000–6000 (25 °C) |
| Isomerer Bisphenol-F-diglycidylether | BFGE | 0,60–0,62 | 5000–7000 (25 °C |
| Novolak-Epoxidharz | NOEP | 0,56–0,58 | 1100–1700 (52 °C) |
| Polyoxypropylenglykoldiglycidylether | PPGE | 0,30–0,32 | 30– 60 (25 °C) |

| Polyisocyanat | Kurzbezeichnung | Isocyanatwert mol/100 g | Viskosität mPa · s |
|---|---|---|---|
| Isomeres Diphenylmethandiisocyanat | MDI | 0,78–0,80 | 15 (25 °C) |
| Carbodiimid-Polyisocyanat | CDIC | 0,67–0,69 | 40 (25 °C) |
| Polyolmodifiziertes Diisocyanat | POIC | 0,59–0,61 | 140 (25 °C) |

| Härtungskatalysator | Kurzbezeichnung | Bemerkung |
|---|---|---|
| Bortrichlorid · Dimethylbenzylaminaddukt | $BCl_3$ · DMBA | – |
| Bortrichlorid · Dimethyloctylaminaddukt | $BCl_3$ · DMOA | – |
| Bortrifluorid · Dimethylbenzylaminaddukt | $BF_3$ · DMBA | – |
| Bortrifluorid · 1-Benzyl-2-phenylimidazoladdukt | $BF_3$ · 1B2PI | – |
| Isomeres Bis(dimethylamino)-diphenylmethan | T-Base | – |
| 1,2-Dimethylimidazol | 1,2-DMI | gereinigt |
| 1-Cyanoethyl-2-phenylimidazol | 1CE2PI | gereinigt |
| 1-Benzyl-2-phenylimidazol | 1B2PI | gereinigt |

| Füllstoff | Kurzbezeichnung | Bemerkung |
|---|---|---|
| Quarzmehl | QM I | 6 400 M/cm$^2$ |
| Quarzmehl | QM II | 16 900 M/cm$^2$ |

Tabelle 6

Zusammensetzung der EP/IC-Harze

| EP/IC-Harz | Polyepoxid | Polyisocyanat | EP : IC mol/mol | Härtungskatalysator | Füllstoff |
|---|---|---|---|---|---|
| A | BAGE | MDI | 1,0 | 1,5% $BCl_3$ · DMBA | 66% QM I |
| B | BAGE | MDI | 2,0 | 1,5% $BCl_3$ · DMBA | 66% QM I |
| C | BAGE | MDI | 5,0 | 2,0% $BCl_3$ · DMBA | 66% QM I |
| D (Vergleich) | BAGE | MDI | 0,5 | 2,0% $BCl_3$ · DMBA | 66% QM i |
| E | NOEP | MDI | 3,0 | 1,5% $BCl_3$ · DMOA | 66% QM I |
| F (Vergleich) | NOEP | MDI | 0,5 | 2,0% $BCl_3$ · DMOA | 66% QM I |
| G | BAGE | MDI | 2,0 | 1,0% 1,2-DMI | 66% QM I |
| H | BAGE | MDI | 2,0 | 1,5% $BF_3$ · 1B2PI | 66% QM I |
| I | BFGE | CDIC | 1,0 | 1,0% 1CE2PI | 66% QM II |
| K | BAGE | POIC | 1,0 | 1,0% 1CE2PI | 66% QM II |

Tabelle 7

OX/ICR-Formstoffe: Eigenschaften, Molverhältnis OX : ICR, Epoxidumsatz

| EP/IC-Harz Bezeichnung[1] | EP : IC mol/mol | MT[2] °C | OX/ICR-Formstoff | | OX : ICR mol/mol | Epoxidumsatz[3] % |
|---|---|---|---|---|---|---|
| | | | BF[2] N/mm$^2$ | SZ[2] Nmm/mm$^2$ | | |
| A | 1,0 | 205 | 106 | 9,5 | 1,05 | 93 |
| B | 2,0 | 180 | 116 | 11 | 1,90 | 96 |
| C | 5,0 | 145 | 125 | 15,5 | 5,71 | 100 |
| D (Vergleich) | 0,5 | 225 | 76 | 4 | 0,51 | 80 |

Tabelle 7 (Fortsetzung)

OX/ICR-Formstoffe: Eigenschaften, Molverhältnis OX : ICR, Epoxidumsatz

| EP/IC-Harz Bezeichnung[1] | EP : IC mol/mol | MT[2] °C | OX/ICR-Formstoff BF[2] N/mm² | SZ[2] Nmm/mm² | OX : ICR mol/mol | Epoxidumsatz[3] % |
|---|---|---|---|---|---|---|
| E | 3,0 | 210 | 105 | 9,5 | 2,34 | 95 |
| F (Vergleich) | 0,5 | 235 | 71 | 3,5 | 0,42 | 76 |
| G | 2,0 | 160 | 135 | 17 | 4,40 | 100 |
| H | 2,0 | 180 | 120 | 12 | 1,50 | 100 |
| I | 1,0 | 195 | 145 | 15 | 1,70 | 100 |
| K | 1,0 | 155 | 163 | 20 | 4,70 | 100 |

[1] Chemische Bezeichnung und Zusammensetzung der EP/IC-Harze siehe Tabelle 5 und 6
[2] MT = Wärmeformbeständigkeit nach Martens
  BF = Biegefestigkeit
  SZ = Schlagzähigkeit
[3] Isocyanatumsatz 100%

## Patentansprüche

1. Verfahren zur Herstellung von Oxazolidinon- (OX-) und Isocyanuratringe (ICR) enthaltenden Reaktionsharzformstoffen (OX/ICR-Formstoffe), indem man Mischungen aus im wesentlichen OXfreien Polyepoxiden und aus Polyisocyanaten (EP/IC-Harze) in Gegenwart eines Härtungskatalysators bei Temperaturen bis 130 °C geliert und anschließend nachhärtet, bis mehr als 90% der Epoxid- und Isocyanatgruppen umgesetzt sind, dadurch gekennzeichnet, daß man lösungsmittelfreie, flüssige Gemische aus Polyepoxiden und Polyisocyanaten mit einer Viskosität bis zu 7000 mPa · s bei 25 °C in einem Ansatzmolverhältnis der Epoxid- und Isocyanatgruppen von 1 bis 5 einsetzt, als Katalysatoren tert. Amine oder Imidazole verwendet und die Reaktionsbedingungen derart wählt, daß das Molverhältnis der Oxazolidinon- und Isocyanuratringe (OX:ICR) im Formstoff zwischen 1 und 5,7 liegt.

2. Verfahren zur Herstellung von OX/ICR-Formstoffen nach Anspruch 1, dadurch gekennzeichnet, daß die Geliertemperatur 80 bis 130 °C und die Nachhärtungstemperatur 130–200 °C beträgt.

3. Verfahren zur Herstellung von OX/ICR-Formstoffen nach Anspruch 1 oder 2, dadurch gekennzeichnet, daß das Molverhältnis OX:ICR zwischen 1 und 5 liegt.

4. Verfahren zur Herstellung von OX/ICR-Formstoffen nach einem der Ansprüche 1 bis 3, dadurch gekennzeichnet, daß latente Härtungskatalysatoren verwendet werden.

5. Verfahren zur Herstellung von OX/ICR-Formstoffen nach Anspruch 4, dadurch gekennzeichnet, daß als latente Katalysatoren Additionskomplexe von Bortrihalogeniden mit tert. Aminen und Imidazolen, insbesondere die Addukte von Bortrichlorid mit Dimethylbenzylamin und von Bortrifluorid mit 1-Benzyl-2-phenylimidazol, verwendet werden.

6. Verfahren zur Herstellung von OX/ICR-Formstoffen nach Anspruch 4, dadurch gekennzeichnet, daß als latente Katalysatoren mit Elektronenakzeptoren, insbesondere 7,7,8,8-Tetracyanochinodimethan, desaktivierte tert. Amine und Imidazole verwendet werden.

7. Verfahren zur Herstellung von OX/ICR-Formstoffen nach Anspruch 4, dadurch gekennzeichnet, daß als latente Katalysatoren Oniumsalze von tert. Aminen und Imidazolen, insbesondere Benzyltrimethylammoniumchlorid und 1,2-Dimethylimidazoliumtetraphenylborat, verwendet werden.

8. Verfahren zur Herstellung von OX/ICR-Formstoffen nach einem oder mehreren der Ansprüche 1 bis 7, dadurch gekennzeichnet, daß der Gehalt des Katalysators in den EP/IC-Harzen 0,01 bis 5 Gew.-%, vorzugsweise 0,25 bis 2,5 Gew.-%, beträgt.

9. Verfahren zur Herstellung von OX/ICR-Formstoffen nach einem oder mehreren der Ansprüche 1 bis 8, dadurch gekennzeichnet, daß die EP/IC-Harze mineralische und/oder faserförmige Füllstoffe sowie gegebenenfalls andere technisch übliche Zusatzstoffe enthalten.

10. Verfahren zur Herstellung von OX/ICR-Formstoffen nach Anspruch 9, dadurch gekennzeichnet, daß als Füllstoff Quarzmehl, Quarzgut, Aluminiumoxid oder Dolomit verwendet wird.

11. Verwendung der nach einem oder mehreren der Ansprüche 1 bis 10 hergestellten OX/ICR-Formstoffe zur Imprägnierung und Einbettung von elektrischen Wicklungen oder zum Verguß und zur Umhüllung von elektrischen und elektronischen Bauteilen.

## Claims

1. Method of manufacturing reaction resin moulded materials (OX/ICR moulded materials) containing oxazolidinone- (OX-) and isocyanurate-rings (ICR) in which mixtures of substantially OX-free polyepoxides and of polyisocyanates (EP/IC-resins) are gelled in the presence of a curing catalyst at temperatures of up to 130 °C and subsequently after-cured, until more than 90% of the epoxide- and isocyanate groups are converted, characterised in that solvent-free liquid mixtures of polyepoxides and polyisocyanates with a viscosity of up to 7000 mPa · s at 25 °C are set in a starting molar ratio of the epoxide- and isocyanate groups of 1 to 5 [and] tert. amines or imidazoles are used as catalysts, and the reaction conditions are selected such that the molar ratio of the oxazolidinone- and isocyanurate rings (OX:ICR) in the moulded material lies between 1 and 5.7.

2. Method of manufacturing OX/ICR-moulded materials according to claim 1, characterised in that the gelling temperature amounts to 80 to 130 °C and that the after-curing temperature is 130–200 °C.

3. Method of manufacturing OX/ICR-moulded materials according to claim 1 or 2, characterised in that the molar ratio OX:ICR lies between 1 and 5.

4. Method of manufacturing OX/ICR-moulded materials according to one of claims 1 to 3, characterised in that latent curing catalysts are used.

5. Method of manufacturing OX/ICR-moulded materials according to claim 4, characterised in that addition complexes of borontrihalides with tert. amines and imidazoles, particularly the adducts of borontrichloride with dimethylbenzylamine and of borotrifluoride with 1-benzyl-2-phenylimidazole, are used as latent catalysts.

6. Method of manufacturing OX/ICR-moulded materials according to claim 4, characterised in that tert. amines and imidazoles deactivated with electron acceptors, particularly 7,7,8,8-tetracyanoquinodimethane, are used as latent catalysts.

7. Method of manufacturing OX/ICR-moulded materials according to claim 4, characterised in that onium salts of tert. amines and imidazoles, in particular benzyltrimethylammoniumchloride and 1,2-dimethylimidazoliumtetraphenylborate, are used as latent catalysts.

8. Method of manufacturing OX/ICR-moulded materials according to one or several of claims 1 to 7, characterised in that the content of the catalyst in the EP/IC-resins amounts to 0.01 to 5% by weight, preferably 0.25 to 2.5% by weight.

9. Method of manufacturing OX/ICR-moulded materials according to one or several of claims 1 to 8, characterised in that the EP/IC-resins contain mineral and/or fibrous fillers and also, if the case arises, other technically customary additives.

10. Method of manufacturing OX/ICR-moulded materials according to claim 9, characterised in that powdered quartz, fused quartz, aluminium oxide or dolomite is used as filler.

11. Use of the OX/ICR-moulded materials manufactured according to one or several of claims 1 to 10 for impregnation and embedding of electrical windings or for casting and for encasing electrical and electronic components.

## Revendications

1. Procédé de préparation de produits moulés en résine de réaction, contenant des cycles oxazolidinone (OX) et des cycles isocyanurate (ICR) (produits moulés OX/ICR), qui consiste à gélifier des compositions de polyépoxydes sensiblement exemptes de OX, et de polyisocyanates (résines EP/IC), en présence d'un catalyseur de durcissement, à des températures allant jusqu'à 130 °C, et ensuite à leur faire subir un post-durcissement jusqu'à ce que plus de 90% des groupes époxydes et des groupes isocyanates aient réagi, caractérisé en ce qu'on met en œuvre des mélanges, liquides et exempts de solvant, de polyépoxydes et de polyisocyanates, d'une viscosité allant jusqu'à 7000 mPa · s à 25 °C, en un rapport molaire initial des groupes époxydes et des groupes isocyanates de 1 à 5, on utilise comme catalyseurs des amines tertiaires ou des imidazoles et on choisit les conditions de réaction, de façon que le rapport molaire des cycles oxazolidinone et des cycles isocyanurate (OX:ICR) dans le produit moulé soit compris entre 1 et 5,7.

2. Procédé de préparation de produits moulés OX/ICR suivant la revendication 1, caractérisé en ce que la température de gélification est comprise entre 80 et 130 °C, et la température de post-durcissement est comprise entre 130 et 200 °C.

3. Procédé de préparation de produits moulés OX/ICR suivant la revendication 1 ou 2, caractérisé en ce que le rapport molaire OX:ICR est compris entre 1 et 5.

4. Procédé de préparation de produits moulés OX/ICR suivant l'une des revendications 1 à 3, caractérisé en ce qu'on utilise des catalyseurs latents de durcissement.

5. Procédé de préparation de produits moulés OX/ICR suivant la revendication 4, caractérisé en ce qu'on utilise comme catalyseurs latents des complexes d'addition de trihalogénure de bore et d'amines tertiaires et d'imidazoles, notamment les produits d'addition du trichlorure de bore et de la diméthylbenzylamine et du trifluorure de bore et du 1-benzyl-2-phénylimidazole.

6. Procédé de préparation de produits moulés OX/ICR suivant la revendication 4, caractérisé en ce qu'on utilise comme catalyseurs latents des amines tertiaires et des imidazoles, désactivés avec des accepteurs d'électrons, notamment le 7,7,8,8-tétracyano-quinodiméthane.

7. Procédé de préparation de produits moulés OX/ICR suivant la revendication 4, caractérisé en ce qu'on utilise comme catalyseurs latents des sels d'onium d'amines tertiaires et d'imidazoles, notamment du chlorure de benzyltriméthylammonium et du tétraphénylborate de 1,2-diméthylimidazolium.

8. Procédé de préparation de produits moulés OX/ICR suivant l'une ou plusieurs des revendications 1 à 7, caractérisé en ce que la teneur en catalyseur des résines EP/IC est comprise entre 0,01 et 5% en poids et, de préférence, entre 0,25 et 2,5% en poids.

9. Procédé de préparation de produits moulés OX/ICR suivant l'une ou plusieurs des revendications 1 à 8, caractérisé en ce que les résines EP/IC contiennent des charges minérales et/ou fibreuses, ainsi que, le cas échéant. d'autres additifs habituels dans la technique.

10. Procédé de préparation de produits moulés OX/ICR suivant la revendication 9, caractérisé en ce qu'on utilise comme charge de la poudre de quartz, de la silice fondue, de l'oxyde d'aluminium ou de la dolomite.

11. Utilisation des produits moulés OX/ICR, préparés suivant l'une ou plusieurs des revendications 1 à 10, pour imprégner et enrober des enroulements électriques ou pour sceller et enrober des composants électriques et électroniques.